# EUROPEAN PATENT APPLICATION

(11) **EP 2 696 614 A1**
(43) Date of publication of application: **12.02.2014**
(21) Application number: 12767705.2
(22) Date of filing: 27.03.2012
(51) Int. Cl.: H04W 12/04, H04W 92/18

(54) **MOBILE COMMUNICATIONS METHOD, MOBILE MANAGEMENT NODE, AND WIRELESS BASE STATION**

(30) Priority: 01.04.2011 JP 2011082199
(71) Applicant: NTT DOCOMO, INC., Chiyoda-ku Tokyo 100-6150 (JP)
(72) Inventor: IWAMURA, Mikio, Tokyo 100-6150 (JP); HAPSARI, Wuri Andarmawanti, Tokyo 100-6150 (JP)
(74) Representative: HOFFMANN EITLE
(86) International application number: PCT/JP2012/057982
(87) International publication number: WO 2012/137633

(57) **Abstract**

A mobile communication method according to the present invention includes: a step in which a mobile management node MME generates a key Kₓ using a key K_{ASME1} and a key K_{ASME2}, the key Kₓ being used in security of the data signal transmitted and received through a Ud interface, the key K_{ASME1} being managed only by the mobile management node MME and a mobile station UE#1, the key K_{ASME2} being managed only by the mobile management node MME and a mobile station UE#2; a step in which the mobile management node MME transmits the key Kₓ to the mobile station UE#1 and the mobile station UE#2; and a step in which the mobile station UE#1 and the mobile station UE#2 transmit and receive the data signal through the Ud interface using the key Kₓ.

## Description

### Technical Field

The present invention relates to a mobile communication method, a mobile management node and a radio base station.

### Background Art

In cellular mobile communication systems such as a W-CDMA (Wideband-Code Division Multiple Access) system and an LTE (Long Term Evolution) system, plural mobile stations UE are configured to conduct communication with each other through a radio access network device, or a core network device or the like.

### Citation List

### Non-Patent Literature

Non-Patent Literature 1: 3GPP TS36.300
Non-Patent Literature 2: 3GPP TS33.401

### Summary of Invention

### Technical Problem

However, in the conventional cellular mobile communication system, even if the plural mobile stations UE are located in an identical cell (or a cell under a domination of the radio access network device), unfortunately a process load on the radio access network device increases because both a data signal and a control signal are configured to transmitted and received through the radio access network device.

In order to solve the problem, it is conceivable that the plural mobile stations transmit and receive the data signal through an inter-mobile station interface (hereinafter referred to as a Ud interface) without a Uu interface that is set between the mobile stations and the radio base station.

However, in such cases, unfortunately an inter-mobile station communication key used in security (concealment or falsification detection) of the data signal transmitted and received through the Ud interface cannot be generated using a mechanism of the existing mobile communication system.

The present invention has been devised to solve the problems described above, and an object thereof is to provide a mobile communication method, a mobile management node, and a radio base station, for being able to generate the inter-mobile station communication key, which is used in the security (the concealment or the falsification detection) of the data signal transmitted and received through the Ud interface, using the mechanism of the existing mobile communication system.

### Solution to Problem

In accordance with a first feature of the present invention, a mobile communication method in which a first mobile station and a second mobile station transmit and receive a data signal through an inter-mobile station interface without a radio base station interface, the inter-mobile station interface being set between the first mobile station and the second mobile station, the radio base station interface being set between a radio base station and the first mobile station and the second mobile station, includes: a step in which a mobile management node generates an inter-mobile station communication key using a first access security management key and a second access security management key, the inter-mobile station communication key being used in security of the data signal transmitted and received through the inter-mobile station interface, the first access security management key being managed only by the mobile management node and the first mobile station, the second access security management key being managed only by the mobile management node and the second mobile station; a step in which the mobile management node transmits the inter-mobile station communication key to the first mobile station and the second mobile station; and a step in which the first mobile station and the second mobile station transmit and receive the data signal through the inter-mobile station interface using the inter-mobile station communication key.

In accordance with a second feature of the present invention, a mobile management node used in a mobile communication system, the mobile communication system being configured such that a first mobile station and a second mobile station can transmit and receive a data signal through an inter-mobile station interface without a radio base station interface, the inter-mobile station interface being set between the first mobile station and the second mobile station, the radio base station interface being set between a radio base station and the first mobile station and the second mobile station, includes: a generator that is configured to generate an inter-mobile station communication key using a first access security management key and a second access security management key, the inter-mobile station communication key being used in security of the data signal transmitted and received through the inter-mobile station interface, the first access security management key being managed only by the mobile management node and the first mobile station, the second access security management key being managed only by the mobile management node and the second mobile station; and a transmission unit that is configured to transmit the inter-mobile station communication key to the first mobile station and the second mobile station.

In accordance with a third feature of the present invention, a mobile communication method in which a first mobile station and a second mobile station transmit and receive a data signal through an inter-mobile station interface without a radio base station interface, the inter-mobile station interface being set between the first mobile station and the second mobile station, the radio base station interface being set between a radio base station and the first mobile station and the second mobile station, includes: a step in which the radio base station generates an inter-mobile station communication key using a first radio base station key and a second radio base station key, the inter-mobile station communication key being used in security of the data signal transmitted and received through the inter-mobile station interface, the first radio base station key being managed only by the radio base station and the first mobile station, the second radio base station key being managed only by the radio base station and the second mobile station; a step in which the radio base station transmits the inter-mobile station communication key to the first mobile station and the second mobile station; and a step in which the first mobile station and the second mobile station transmit and receive the data signal through the inter-mobile station interface using the inter-mobile station communication key.

In accordance with a fourth feature of the present invention, a radio base station used in a mobile communication system, the mobile communication system being configured such that a first mobile station and a second mobile station can transmit and receive a data signal through an inter-mobile station interface without a radio base station interface, the inter-mobile station interface being set between the first mobile station and the second mobile station, the radio base station interface being set between the radio base station and the first mobile station and the second mobile station, includes: a generator that is configured to generate an inter-mobile station communication key using a first radio base station key and a second radio base station key, the inter-mobile station communication key being used in security of the data signal transmitted and received through the inter-mobile station interface, the first radio base station key being managed only by the radio base station and the first mobile station, the second radio base station key being managed only by the radio base station and the second mobile station; and a transmission unit that is configured to transmit the inter-mobile station communication key to the first mobile station and the second mobile station.

In accordance with a fifth feature of the present invention, a mobile communication method in which a first mobile station and a second mobile station transmit and receive a data signal through an inter-mobile station interface without a radio base station interface, the inter-mobile station interface being set between the first mobile station and the second mobile station, the radio base station interface being set between a radio base station and the first mobile station and the second mobile station, the mobile communications method includes: a step in which a mobile management node generates a first parameter and a second parameter to generate an inter-mobile station communication key using a first access security management key and a second access security management key, the inter-mobile station communication key being used in security of the data signal transmitted and received through the inter-mobile station interface, the first access security management key being managed only by the mobile management node and the first mobile station, the second access security management key being managed only by the mobile management node and the second mobile station; a step in which the mobile management node transmits the first parameter to the first mobile station and transmits the second parameter to the second mobile station; a step in which the first mobile station generates the inter-mobile station communication key using the first parameter; a step in which the second mobile station generates the inter-mobile station communication key using the second parameter; and a step in which the first mobile station and the second mobile station transmit and receive the data signal through the inter-mobile station interface using the inter-mobile station communication key.

In accordance with a sixth feature of the present invention, a mobile management node used in a mobile communication system, the mobile communication system being configured such that a first mobile station and a second mobile station can transmit and receive a data signal through an inter-mobile station interface without a radio base station interface, the inter-mobile station interface being set between the first mobile station and the second mobile station, the radio base station interface being set between a radio base station and the first mobile station and the second mobile station, includes: a generator that is configured to generate a first parameter and a second parameter to generate an inter-mobile station communication key using a first access security management key and a second access security management key, the inter-mobile station communication key being used in security of the data signal transmitted and received through the inter-mobile station interface, the first access security management key being managed only by the mobile management node and the first mobile station, the second access security management key being managed only by the mobile management node and the second mobile station; and a transmission unit that is configured to transmit the first parameter to the first mobile station and to transmit the second parameter to the second mobile station.

In accordance with a seventh feature of the present invention, a mobile communication method in which a first mobile station and a second mobile station transmit and receive a data signal through an inter-mobile station interface without a radio base station interface, the inter-mobile station interface being set between the first mobile station and the second mobile station, the radio base station interface being set between a radio base station and the first mobile station and the second mobile station, includes: a step in which the radio base station generates a first parameter and a second parameter to generate an inter-mobile station communication key using a first radio base station key and a second radio base station key, the inter-mobile station communication key being used in security of the data signal transmitted and received through the inter-mobile station interface, the first radio base station key being managed only by the radio base station and the first mobile station, the second radio base station key being managed only by the radio base station and the second mobile station; a step in which the radio base station transmits the first parameter to the first mobile station and transmits the second parameter to the second mobile station; a step in which the first mobile station generates the inter-mobile station communication key using the first parameter; a step in which the second mobile station generates the inter-mobile station communication key using the second parameter; and a step in which the first mobile station and the second mobile station transmit and receive the data signal through the inter-mobile station interface using the inter-mobile station communication key.

In accordance with an eighth feature of the present invention, a radio base station used in a mobile communication system, the mobile communication system being configured such that a first mobile station and a second mobile station can transmit and receive a data signal through an inter-mobile station interface without a radio base station interface, the inter-mobile station interface being set between the first mobile station and the second mobile station, the radio base station interface being set between the radio base station and the first mobile station and the second mobile station, includes: a generator that is configured to generate a first parameter and a second parameter to generate an inter-mobile station communication key using a first radio base station key and a second radio base station key, the inter-mobile station communication key being used in security of the data signal transmitted and received through the inter-mobile station interface, the first radio base station key being managed only by the radio base station and the first mobile station, the second radio base station key being managed only by the radio base station and the second mobile station; and a transmission unit that is configured to transmit the first parameter to the first mobile station and to transmit the second parameter to the second mobile station.

In accordance with a ninth feature of the present invention, a mobile station that acts as a first mobile station in a mobile communication system, the mobile communication system being configured such that the first mobile station and a second mobile station can transmit and receive a data signal through an inter-mobile station interface without a radio base station interface, the inter-mobile station interface being set between the first mobile station and the second mobile station, the radio base station interface being set between a radio base station and the first mobile station and the second mobile station, includes: a reception unit that is configured to acquire an inter-mobile station communication key from the radio base station or a mobile management node; and a communication unit that is configured to transmit and receive the data signal to and from the second mobile station through the inter-mobile station interface using the inter-mobile station communication key.

In accordance with a tenth feature of the present invention, a mobile station that acts as a first mobile station in a mobile communication system, the mobile communication system being configured such that the first mobile station and a second mobile station can transmit and receive a data signal through an inter-mobile station interface without a radio base station interface, the inter-mobile station interface being set between the first mobile station and the second mobile station, the radio base station interface being set between a radio base station and the first mobile station and the second mobile station, includes: a reception unit that is configured to acquire a first parameter from the radio base station or a mobile management node; a generator that is configured to generate an inter-mobile station communication key using the first parameter; and a communication unit that is configured to transmit and receive the data signal to and from the second mobile station through the inter-mobile station interface using the inter-mobile station communication key.

### Advantageous Effects of Invention

As described above, the present invention can provide a mobile communication method, a mobile management node, and a radio base station, for being able to generate an inter-mobile station communication key, which is used in the security (the concealment or the falsification detection) of a data signal transmitted and received through a Ud interface, using a mechanism of the existing mobile communication system.

### Brief Description of Drawings

Fig. 1 is an entire configuration diagram of a mobile communication system according to a first embodiment of the present invention.
Fig. 2 is a functional block diagram of a mobile management node and a radio base station according to the first embodiment of the present invention.
Fig. 3 is a view illustrating a method for generating a key Kₓ in the mobile communication system according to the first embodiment of the present invention.
Fig. 4 is a view illustrating a method for generating the key Kₓ in a mobile communication system according to a second embodiment of the present invention.
Fig. 5 is a functional block diagram of a mobile station according to the second embodiment of the present invention.

### Description of Embodiments

### (Mobile communication system of first embodiment of the present invention)

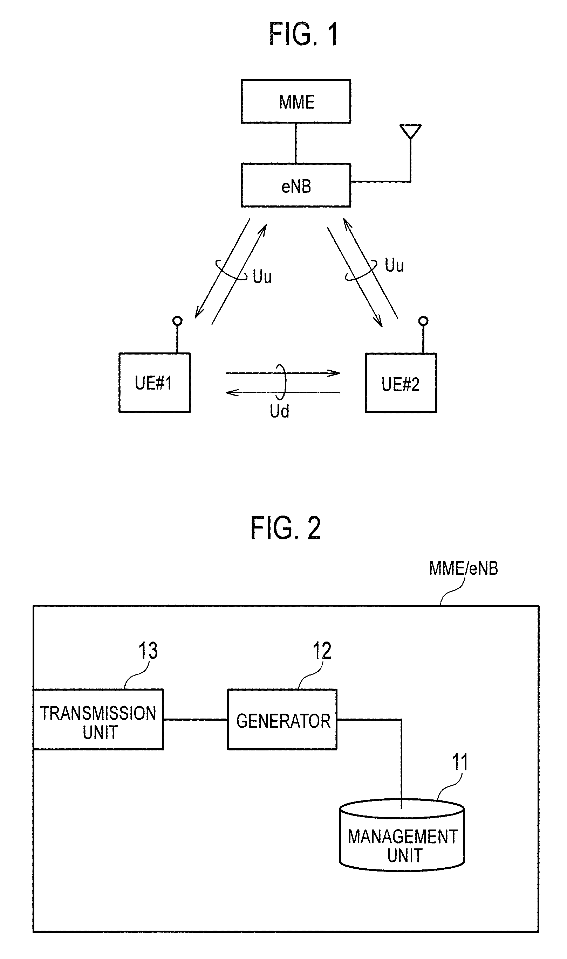

A mobile communication system according to a first embodiment of the present invention will be described with reference to Figs. 1 to 3.

The mobile communication system of the embodiment is an LTE mobile communication system, and includes a mobile management node MME (Mobility Management Entity) and a radio base station eNB that is connected under a domination of the mobile management node MME as illustrated in Fig. 1. The present invention can also be applied to a cellar mobile communication system except the LTE mobile communication system.

The radio base station eNB and mobile stations UE#1/UE#2 are configured to transmit and receive a data signal to and from each other through a Uu interface, and the mobile station UE#1 and the mobile station UE#2 are configured to transmit and receive the data signal to and from each other through a Ud interface.

That is, the mobile station UE#1 can transmit and receive the data signal to and from the mobile station UE#2 through the radio base station eNB (through the Uu interface), and transmit and receive the data signal to and from the mobile station UE#2 without the radio base station eNB (through the Ud interface)

Similarly, the mobile station UE#2 can transmit and receive the data signal to and from the mobile station UE#1 through the radio base station eNB (through the Uu interface), and transmit and receive the data signal to and from the mobile station UE#1 without the radio base station eNB (through the Ud interface).

At this point, security (concealment or falsification detection) is applied to the data signal that is transmitted and received through the Uu interface or the Ud interface. A common key is prepared between transmission and reception entities in order to apply the security.

A key generating method in the LTE Uu interface is defined by 3GPP TS33.401 and the like. The present invention relates to the key generating method in the Ud interface.

As illustrated in Fig. 2, the mobile management node MME includes a management unit 11, a generator 12, and a transmission unit 13.

The management unit 11 is configured to manage a key K_{ASME} (Access Security Management Entity) for each mobile station UE. The key K_{ASME} is defined by 3GPP TS33.401. For example, the management unit 11 is configured to manage a key K_{ASME1} for the mobile station UE#1 and a key K_{ASME2} for the mobile station UE#2.

The key K_{ASME1} is not managed by the radio base station eNB or the mobile station UE#2, but managed only by the mobile management node MME and the mobile station UE#1. The key K_{ASME2} is not managed by the radio base station eNB or the mobile station UE#1, but managed only by the mobile management node MME and the mobile station UE#2.

The generator 12 is configured to generate a key Kₓ using the key K_{ASME1}and the key K_{ASME2}. The key Kₓ is used to transmit and receive the data signal between the mobile station UE#1 and the mobile station UE#2 through the Ud interface.

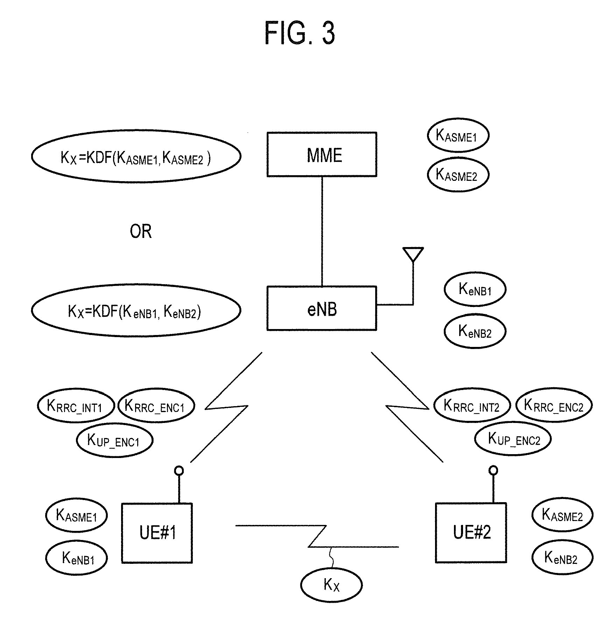

For example, as illustrated in Fig. 3, the generator 12 may be configured to generate the key Kₓ using an equation "Kₓ = KDF (K_{ASME1}, K_{ASME2})".

Using the key K_{ASME1}, the generator 12 may be configured to generate a parameter NH1 (see 3GPP TS33.401) necessary to generate a key K_{eNB1}. The key K_{eNB1} is necessary to generate a key K_{RRC_INT1}, a key K_{RRC_ENC1}, and a key K_{UP_ENC1}, which are used to transmit and receive the data signal between the mobile station UE#1 and the radio base station eNB through the Uu interface.

Similarly, using the key K_{ASME2}, the generator 12 may be configured to generate a parameter NH2 (see 3GPP TS33.401) necessary to generate a key K_{eNB2}. The key K_{eNB2} is necessary to generate a key K_{RRC_INT2}, a key K_{RRC_ENC2}, and a key K_{UP_ENC2}, which are used to transmit and receive the data signal between the mobile station UE#2 and the radio base station eNB through the Uu interface.

The generator 12 may be configured to generate the key K_{eNB1} using the key K_{ASME1}, and to generate the key K_{eNB2} using the key K_{ASME2}.

The transmission unit 13 is configured to transmit the key Kₓ to the mobile station UE#1 and the mobile station UE#2.

The transmission unit 13 may be configured to transmit the parameters NH1 and NH2 to the radio base station eNB.

The transmission unit 13 may be configured to transmit a counter NCC1 of the parameter NH1 to the radio base station eNB and the mobile station UE#1, and to transmit a counter NCC2 of the parameter NH2 to the radio base station eNB and the mobile station UE#2.

The transmission unit 13 may be configured to transmit the key K_{eNB1} and the K_{eNB2} to the radio base station eNB.

At this point, the mobile station UE#1 is configured to transmit and receive the data signal to and from the mobile station UE#2 through the Ud interface using the key Kₓ received from the mobile management node MME.

Similarly, the mobile station UE#2 is configured to transmit and receive the data signal to and from the mobile station UE#1 through the Ud interface using the key Kₓ received from the mobile management node MME.

The mobile station UE#1 is configured to generate the key K_{RRC_INT1}, the key K_{RRC_ENC1}, and the key K_{UP_ENC1} using the parameter NH1 received from the mobile management node MME and the key eNB1 managed by the mobile station UE#1. The mobile station UE#1 is also configured to transmit and receive the data signal to and from the radio base station eNB through the Uu interface using the key K_{RRC_INT1}, the key K_{RRC_ENC1}, and the key K_{UP_ENC1}.

The mobile station UE#2 is configured to generate the key K_{RRC_INT2}, the key K_{RRC_ENC2}, and the key K_{UP_ENC2} using the parameter NH2 received from the mobile management node MME and the key _{eNB2} managed by the mobile station UE#2. The mobile station UE#2 is also configured to transmit and receive the data signal to and from the radio base station eNB through the Uu interface using the key K_{RRC_INT2}, the key K_{RRC_ENC2}, and the key K_{UP_ENC2}.

In the mobile communication system according to the first embodiment of the present invention, using the key K_{ASME1}and the key K_{ASME2}, which are used in the existing mobile communication system, the mobile management node MME can generate the key Kₓ, which is used to transmit and receive the data signal between the mobile station UE#1 and the mobile station UE#2 through the Ud interface, and the mobile management node MME can transmit the data signal to the mobile station UE#1 and the mobile station UE#2.

### (First modification)

A first modification of the mobile communication system according to the first embodiment of the present invention will be described below by focusing on a point different from the mobile communication system of the first embodiment.

In the mobile communication system of the first modification, instead of the mobile management node MME, the radio base station eNB generates the key Kₓ and transmits the key Kₓ to the mobile station UE#1 and the mobile station UE#2.

Specifically, as illustrated in Fig. 2, instead of the mobile management node MME, the radio base station eNB includes the management unit 11, the generator 12, and the transmission unit 13.

The management unit 11 is configured to manage a key K_{eNB} for each mobile station UE. The key K_{eNB} is defined by 3GPP TS33.401. For example, the management unit 11 is configured to manage the key K_{eNB1} for the mobile station UE#1 and the key K_{eNB2} for the mobile station UE#2.

The key K_{eNB1} is not managed by the mobile management node MME (except the first-time key K_{eNB1} generated by the MME during establishment of the communication) or the mobile station UE#2, but managed only by the radio base station eNB and the mobile station UE#1. The key K_{eNB2} is not managed by the mobile management node MME (except the first-time key K_{eNB2} generated by the MME during the establishment of the communication) or the mobile station UE#1, but managed only by the radio base station eNB and the mobile station UE#2.

The generator 12 is configured to generate the key Kₓ using the key K_{eNB1} and the key K_{eNB2}. The key Kₓ is used to transmit and receive the data signal between the mobile station UE#1 and the mobile station UE#2 through the Ud interface.

For example, as illustrated in Fig. 3, the generator 12 may be configured to generate the key Kₓ using an equation "Kₓ = KDF(K_{eNB1}, K_{eNB2})".

Using the parameter NH1 received from the mobile management node MME and the key K_{eNB1} managed by the generator 12, the generator 12 maybe configured to generate the key K_{RRC_INT1}, the key K_{RRC_ENC1}, and the key K_{UP_ENC1}, which are used to transmit and receive the data signal between the mobile station UE#1 and the radio base station eNB through the Uu interface.

Similarly, using the parameter NH2 received from the mobile management node MME and the key K_{eNB2} managed by the generator 12, the generator 12 may be configured to generate the key K_{RRC_INT2}, the key K_{RRC_ENC2}, and the key K_{UP_ENC2}, which are used to transmit and receive the data signal between the mobile station UE#2 and the radio base station eNB through the Uu interface.

The transmission unit 13 is configured to transmit the key Kₓ to the mobile station UE#1 and the mobile station UE#2.

In the mobile communication system according to the first modification of the first embodiment of the present invention, using the key K_{eNB1} and the key K_{eNB2}, which are used in the existing mobile communication system, the radio base station eNB can generate the key Kₓ, which is used to transmit and receive the data signal between the mobile station UE#1 and the mobile station UE#2 through the Ud interface, and the radio base station eNB can transmit the data signal to the mobile station UE#1 and the mobile station UE#2.

### (Second embodiment of the present invention)

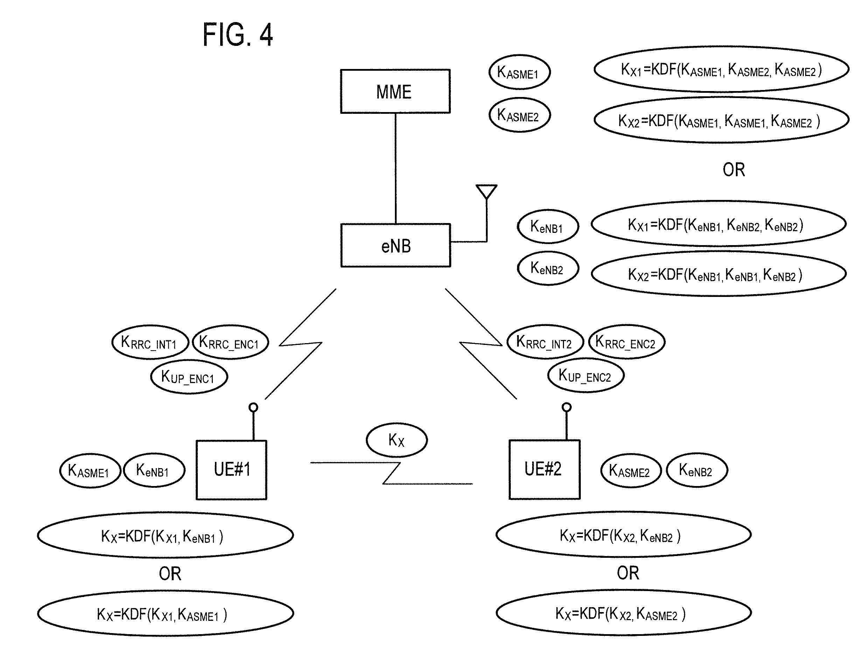

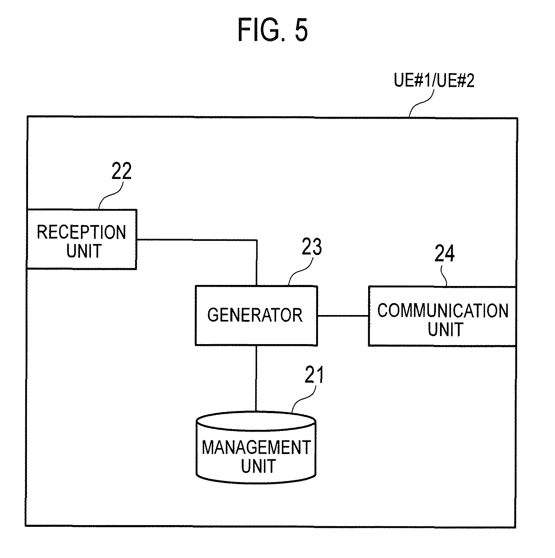

A mobile communication system according to a second embodiment of the present invention will be described with reference to Figs. 4 and 5. The mobile communication system according to the second embodiment of the present invention will be described below by focusing on the point different from the mobile communication system of the first embodiment.

The generator 12 of the mobile management node MME is configured to generate a parameter Kₓ₁ and a parameter Kₓ₂ using the key K_{ASME1}and the key K_{ASME2}. The parameter Kₓ₁ and the parameter Kₓ₂ are used to generate the Kₓ used to transmit and receive the data signal between the mobile station UE#1 and the mobile station UE#2 through the Ud interface.

For example, as illustrated in Fig. 4, the generator 12 of the mobile management node MME may be configured to generate the parameter Kₓ₁ using an equation "Kₓ₁ = KDF (K_{ASME1}, K_{ASME2}, K_{ASME2})" (alternatively, an equation "Kₓ₁ = KDF(K_{ASME2})" may be used).

As illustrated in Fig. 4, the generator 12 of the mobile management node MME may be configured to generate the parameter Kₓ₂ using an equation "Kₓ₂ = KDF(K_{ASME1}, K_{ASME1}, K_{ASME2})" (alternatively, an equation "Kₓ₂ = KDF(K_{ASME1})" may be used).

The transmission unit 13 of the mobile management node MME is configured to transmit the parameter Kₓ₁ to the mobile station UE#1, and to transmit the parameter Kₓ₂ to the mobile station UE#2.

As illustrated in Fig. 5, each of the mobile station UE#1 and the mobile station UE#2 includes a management unit 21, a reception unit 22, a generator 23, and a communication unit 24.

The management unit 21 of the mobile station UE#1 is configured to manage the key K_{ASME1} and the key K_{eNB1}. The management unit 21 of the mobile station UE#2 is configured to manage the key K_{ASME2} and the key K_{eNB2.}

The reception unit 22 of the mobile station UE#1 is configured to receive the counter NCC1 of the parameter NH1 and the parameter Kₓ₁ from the mobile management node MME. The reception unit 22 of the mobile station UE#2 is configured to receive the counter NCC2 of the parameter NH2 and the parameter Kₓ₂ from the mobile management node MME.

The generator 23 of the mobile station UE#1 is configured to generate the key Kₓ using the parameter Kₓ₁ and the key K_{ASME1} managed by the mobile station UE#1. The key Kₓ is used to transmit and receive the data signal to and from the mobile station UE#2 through the Ud interface.

For example, as illustrated in Fig. 4, the generator 23 of the mobile station UE#1 may be configured to generate the key Kₓ using an equation "Kₓ = KDF(Kₓ₁, K_{ASME1})".

Similarly the generator 23 of the mobile station UE#2 is configured to generate the key Kₓ using the parameter Kₓ₂ and the key K_{ASME2} managed by the mobile station UE#2. The key Kₓ is used to transmit and receive the data signal to and from the mobile station UE#1 through the Ud interface.

For example, as illustrated in Fig. 4, the generator 23 of the mobile station UE#2 may be configured to generate the key Kₓ using an equation "Kₓ = KDF(Kₓ₂, K_{ASME2})".

The generator 23 of the mobile station UE#1 is configured to generate the key K_{RRC_INT1}, the key K_{RRC_ENC1}, and the key K_{UP_ENC1} using the parameter NH1 received from the mobile management node MME and the key eNB1 managed by the mobile station UE#1.

The mobile station UE#2 is configured to generate the key K_{RRC_INT2}, the key K_{RRC_ENC2}, and the key K_{UP_ENC2} using the parameter NH2 received from the mobile management node MME and the key eNB2 managed by the mobile station UE#2.

The communication unit 24 of the mobile station UE1 is configured to transmit and receive the data signal to and from the mobile station UE#2 through the Ud interface using the key Kₓ.

The communication unit 24 of the mobile station UE2 is configured to transmit and receive the data signal to and from the mobile station UE#1 through the Ud interface using the key Kₓ.

In the mobile communication system according to the second embodiment of the present invention, using the key K_{ASME1} and the key K_{ASME2}, which are used in the existing mobile communication system, the mobile management node MME generates the parameter Kₓ₁ and the parameter Kₓ₂ and transmits the parameter Kₓ₁ and the parameter Kₓ₂ to the mobile station UE#1 and the mobile station UE#2, and the mobile station UE#1 and the mobile station UE#2 can generate the key Kₓ, which is used to transmit and receive the data signal between the mobile station UE#1 and the mobile station UE#2 through the Ud interface, using the parameter Kₓ₁ and the parameter Kₓ₂.

### (Second modification)

A second modification of the mobile communication system according to the second embodiment of the present invention will be described below by focusing on the point different from the mobile communication system of the second embodiment.

In the mobile communication system of the second modification, instead of the mobile management node MME, the radio base station eNB generates the parameter Kₓ₁ and the parameter Kₓ₂ and transmits the parameter Kₓ₁ and the parameter Kₓ₂ to the mobile station UE#1 and the mobile station UE#2.

The generator 12 of the radio base station eNB is configured to generate the parameter Kₓ₁ and the parameter Kₓ₂ using the key K_{eNB1} and the key K_{eNB2}. The parameter Kₓ₁ and the parameter Kₓ₂ are used to transmit and receive the data signal between the mobile station UE#1 and the mobile station UE#2 through the Ud interface.

For example, as illustrated in Fig. 4, the generator 12 of the radio base station eNB may be configured to generate the parameter Kₓ₁ using an equation "Kₓ₁ = KDF(K_{eNB1}, K_{eNB2}, K_{eNB2})" (alternatively, an equation "Kₓ₁ = KDF(K_{eNB2})" may be used).

As illustrated in Fig. 4, the generator 12 of the radio base station eNB may be configured to generate the parameter Kₓ₂ using an equation "Kₓ₂ = KDF(K_{eNB1}, K_{eNB1}, K_{eNB2})" (alternatively, an equation "Kₓ₂ = KDF(K_{eNB1})" may be used).

The transmission unit 13 of the radio base station eNB is configured to transmit the parameter Kₓ₁ to the mobile station UE#1, and to transmit the parameter Kₓ₂ to the mobile station UE#2.

The reception unit 22 of the mobile station UE#1 is configured to receive the parameter Kₓ₁ from the radio base station eNB. The reception unit 22 of the mobile station UE#2 is configured to receive the parameter Kₓ₂ from the radio base station eNB.

The generator 23 of the mobile station UE#1 is configured to generate the key Kₓ using the parameter Kₓ₁ and the key K_{eNB1} managed by the mobile station UE#1. The key Kₓ is used to transmit and receive the data signal to and from the mobile station UE#2 through the Ud interface.

For example, as illustrated in Fig. 4, the generator 23 of the mobile station UE#1 may be configured to generate the key Kₓ using an equation "Kₓ = KDF(Kₓ₁, K_{eNB1})".

Similarly the generator 23 of the mobile station UE#2 is configured to generate the key Kₓ using the parameter Kₓ₂ and the key K_{eNB2} managed by the mobile station UE#2. The key Kₓ is used to transmit and receive the data signal to and from the mobile station UE#1 through the Ud interface.

For example, as illustrated in Fig. 4, the generator 23 of the mobile station UE#2 may be configured to generate the key Kₓ using an equation "Kₓ = KDF(Kₓ₂, K_{eNB2})".

In the mobile communication system according to the second modification of the second embodiment, using the key K_{eNB1} and the key K_{eNB2}, which are used in the existing mobile communication system, the radio base station eNB generates the parameter Kₓ₁ and the parameter Kₓ₂ and transmits the parameter Kₓ₁ and the parameter Kₓ₂ to the mobile station UE#1 and the mobile station UE#2, and the mobile station UE#1 and the mobile station UE#2 can generate the key Kₓ, which is used to transmit and receive the data signal between the mobile station UE#1 and the mobile station UE#2 through the Ud interface, using the parameter Kₓ₁ and the parameter Kₓ₂.

In the above all embodiments, the key actually used to transmit and receive the data through the Ud interface may be a key derived from the key Kₓ.

For example, the key derived from the key Kₓ may be used based on some sort of parameter such as a counter, a bearer ID, a bearer type, and a transmission and reception direction.

The above features of the embodiments may be expressed as follows.

In the first feature of the embodiments, the mobile communication method in which the mobile station UE#1 (the first mobile station) and the mobile station UE#2 (the second mobile station) transmit and receive the data signal through the Ud interface (the inter-mobile station interface) without the Uu interface (the radio base station interface), the Ud interface being set between the mobile station UE#1 and the mobile station UE#2, the Uu interface being set between the radio base station eNB and the mobile station UE#1 and the mobile station UE#2, includes: the step in which the mobile management node MME generates the key Kₓ (the inter-mobile station communication key) using the key K_{ASME1} (the first access security management key) and the key K_{ASME2} (the second access security management key), the key Kₓ being used in security of the data signal transmitted and received through the Ud interface, the key K_{ASME1}being managed only by the mobile management node MME and the mobile station UE#1, the key K_{ASME2} being managed only by the mobile management node MME and the mobile station UE#2; the step in which the mobile management node MME transmits the key Kₓ to the mobile station UE#1 and the mobile station UE#2; and the step in which the mobile station UE#1 and the mobile station UE#2 transmit and receive the data signal through the Ud interface using the key Kₓ.

In the second feature of the embodiments, the mobile management node MME used in the mobile communication system, the mobile communication system being configured such that the mobile station UE#1 and the mobile station UE#2 can transmit and receive the data signal through the Ud interface without the Uu interface, includes: the generator 12 that is configured to generate key the Kₓ using the key K_{ASME1}and the key K_{ASME2}, the key Kₓ being used in the security of the data signal transmitted and received through the Ud interface; and the transmission unit 13 that is configured to transmit the key Kₓ to the mobile station UE#1 and the mobile station UE#2.

In the third feature of the embodiments, the mobile communication method in which the mobile station UE#1 and the mobile station UE#2 transmit and receive the data signal through the Ud interface without the Uu interface, includes: the step in which the radio base station eNB generates the key Kₓ using the key K_{eNB1} (the first radio base station key) and the key K_{eNB2} (the second radio base station key), the key Kₓ being used in the security of the data signal transmitted and received through the Ud interface, the key K_{eNB1} being managed only by the radio base station eNB and the mobile station UE#1, the key K_{eNB2} being managed only by the radio base station eNB and the mobile station UE#2; the step in which the radio base station eNB transmits the key Kₓ to the mobile station UE#1 and the mobile station UE#2; and the step in which the mobile station UE#1 and the mobile station UE#2 transmit and receive the data signal through the Ud interface using the key Kₓ.

In the fourth feature of the embodiments, the radio base station eNB used in the mobile communication system, the mobile communication system being configured such that the mobile station UE#1 and the mobile station UE#2 can transmit and receive the data signal through the Ud interface without the Uu interface, includes: the generator 12 that is configured to generate the key Kₓ using the key K_{eNB1} and the key K_{eNB2}, the key Kₓ being used in security of the data signal transmitted and received through the Ud interface; and the transmission unit 13 that is configured to transmit the key Kₓ to the mobile station UE#1 and the mobile station UE#2.

In the fifth feature of the embodiments, the mobile communication method in which the mobile station UE#1 and the mobile station UE#2 transmit and receive the data signal through the Ud interface without the Uu interface, includes: the step in which the mobile management node MME generates the parameter Kₓ₁ (the first parameter) and the parameter Kₓ₂ (the second parameter) to generate the key Kₓ using the key K_{ASME1} and the key K_{ASME2}, the key Kₓ being used in the security of the data signal transmitted and received through the Ud interface; the step in which the mobile management node MME transmits the parameter Kₓ₁ to the mobile station UE#1 and transmits the parameter Kₓ₂ to the mobile station UE#2; the step in which the mobile station UE#1 generates the key Kₓ using the parameter Kₓ₁; the step in which the mobile station UE#2 generates the key Kₓ using the parameter Kₓ₂; and the step in which the mobile station UE#1 and the mobile station UE#2 transmit and receive the data signal through the Ud interface using the key Kₓ.

In the sixth feature of the embodiments, the mobile management node MME used in the mobile communication system, the mobile communication system being configured such that the mobile station UE#1 and the mobile station UE#2 can transmit and receive the data signal through the Ud interface without the Uu interface, includes: the generator 12 that is configured to generate the parameter Kₓ₁ and the parameter Kₓ₂ to generate the key Kₓ using the key K_{ASME1} and the key K_{ASME2}, the key Kₓ being used in the security of the data signal transmitted and received through the Ud interface; and the transmission unit 13 that is configured to transmit the parameter Kₓ₁ to the mobile station UE#1 and to transmit the parameter Kₓ₂ to the mobile station UE#2.

In the seventh feature of the embodiments, the mobile communication method in which the mobile station UE#1 and the mobile station UE#2 transmit and receive the data signal through the Ud interface without the Uu interface, includes: the step in which the radio base station eNB generates the parameter Kₓ₁ and the parameter Kₓ₂ to generate the key Kₓ using the key K_{eNB1} and the key K_{eNB2}, the key Kₓ being used in the security of the data signal transmitted and received through the Ud interface; the step in which the radio base station eNB transmits the parameter Kₓ₁ to the mobile station UE#1 and transmits the parameter Kₓ₂ to the mobile station UE#2; the step in which the mobile station UE#1 generates the key Kₓ using the parameter Kₓ₁; the step in which the mobile station UE#2 generates the key Kₓ using the parameter Kₓ₂; and the step in which the mobile station UE#1 and the mobile station UE#2 transmit and receive the data signal through the Ud interface using the key Kₓ.

In the eighth feature of the embodiments, the radio base station eNB used in the mobile communication system, the mobile communication system being configured such that the mobile station UE#1 and the mobile station UE#2 can transmit and receive the data signal through the Ud interface without the Uu interface, includes: the generator 12 that is configured to generate the parameter Kₓ₁ and the parameter Kₓ₂ to generate the key Kₓ using the key K_{eNB1} and the key K_{eNB2}, the key Kₓ being used in the security of the data signal transmitted and received through the Ud interface; and the transmission unit 13 that is configured to transmit the parameter Kₓ₁ to the mobile station UE#1 and to transmit the parameter Kₓ₂ to the mobile station UE#2.

In the ninth feature of the embodiments, the mobile station UE that acts as the mobile station UE#1 in the mobile communication system, the mobile communication system being configured such that the mobile station UE#1 and the mobile station UE#2 can transmit and receive the data signal through the Ud interface without the Uu interface, includes: the reception unit 22 that is configured to acquire the key Kₓ from the radio base station eNB or the mobile management node MME; and the communication unit 24 that is configured to transmit and receive the data signal to and from the mobile station UE#2 through the Ud interface using the key Kₓ.

In the tenth feature of the embodiments, the mobile station UE that acts as the mobile station UE#1 in the mobile communication system, the mobile communication system being configured such that the mobile station UE#1 and the mobile station UE#2 can transmit and receive the data signal through the Ud interface without the Uu interface, includes: the reception unit 22 that is configured to acquire the parameter Kₓ₁ from the radio base station eNB or the mobile management node MME; the generator 23 that is configured to generate the key Kₓ using the parameter Kₓ₁; and the communication unit 24 that is configured to transmit and receive the data signal to and from the mobile station UE#2 through the Ud interface using the key Kₓ.

The operation of the mobile management node MME, the radio base station eNB, the mobile station UE, or the like may be performed by hardware, a software module executed by a processor, or a combination of thereof.

The software module may be provided in any storage medium such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, and a CD-ROM.

The storage medium is connected to the processor such that the processor can write and read information in and from the storage medium. The storage medium may be integrated in the processor. The storage medium and the processor may be provided in an ASIC. The ASIC may be provided in the mobile management node MME, the radio base station eNB, the mobile station UE, or the like. The storage medium and the processor may be provided as a discrete component in the mobile management node MME, the radio base station eNB, the mobile station UE, or the like.

Although the present invention is described in detail using the embodiment, it is clear for those skilled in the art that the present invention is not limited to the embodiment. Various corrections and changes can be made without departing from the scope of the present invention. Accordingly, the description is aimed only at the illustration, and the description has no restrictive meaning to the present invention.

### Reference Signs List

- MME: mobile management node
- eNB: radio base station
- UE: mobile station
- 11, 21: management unit
- 12, 23: generator
- 13: transmission unit
- 22: reception unit
- 24: communication unit

## Claims

1. A mobile communication method in which a first mobile station and a second mobile station transmit and receive a data signal through an inter-mobile station interface without a radio base station interface, the inter-mobile station interface being set between the first mobile station and the second mobile station, the radio base station interface being set between a radio base station and the first mobile station and the second mobile station, the mobile communication method comprising:
a step in which a mobile management node generates an inter-mobile station communication key using a first access security management key and a second access security management key, the inter-mobile station communication key being used in security of the data signal transmitted and received through the inter-mobile station interface, the first access security management key being managed only by the mobile management node and the first mobile station, the second access security management key being managed only by the mobile management node and the second mobile station;
a step in which the mobile management node transmits the inter-mobile station communication key to the first mobile station and the second mobile station; and
a step in which the first mobile station and the second mobile station transmit and receive the data signal through the inter-mobile station interface using the inter-mobile station communication key.

2. A mobile management node used in a mobile communication system, the mobile communication system being configured such that a first mobile station and a second mobile station can transmit and receive a data signal through an inter-mobile station interface without a radio base station interface, the inter-mobile station interface being set between the first mobile station and the second mobile station, the radio base station interface being set between a radio base station and the first mobile station and the second mobile station, the mobile management node comprising:
a generator that is configured to generate an inter-mobile station communication key using a first access security management key and a second access security management key, the inter-mobile station communication key being used in security of the data signal transmitted and received through the inter-mobile station interface, the first access security management key being managed only by the mobile management node and the first mobile station, the second access security management key being managed only by the mobile management node and the second mobile station; and
a transmission unit that is configured to transmit the inter-mobile station communication key to the first mobile station and the second mobile station.

3. A mobile communication method in which a first mobile station and a second mobile station transmit and receive a data signal through an inter-mobile station interface without a radio base station interface, the inter-mobile station interface being set between the first mobile station and the second mobile station, the radio base station interface being set between a radio base station and the first mobile station and the second mobile station, the mobile communication method comprising:
a step in which the radio base station generates an inter-mobile station communication key using a first radio base station key and a second radio base station key, the inter-mobile station communication key being used in security of the data signal transmitted and received through the inter-mobile station interface, the first radio base station key being managed only by the radio base station and the first mobile station, the second radio base station key being managed only by the radio base station and the second mobile station;
a step in which the radio base station transmits the inter-mobile station communication key to the first mobile station and the second mobile station; and
a step in which the first mobile station and the second mobile station transmit and receive the data signal through the inter-mobile station interface using the inter-mobile station communication key.

4. A radio base station used in a mobile communication system, the mobile communication system being configured such that a first mobile station and a second mobile station can transmit and receive a data signal through an inter-mobile station interface without a radio base station interface, the inter-mobile station interface being set between the first mobile station and the second mobile station, the radio base station interface being set between the radio base station and the first mobile station and the second mobile station, the radio base station comprising:
a generator that is configured to generate an inter-mobile station communication key using a first radio base station key and a second radio base station key, the inter-mobile station communication key being used in security of the data signal transmitted and received through the inter-mobile station interface, the first radio base station key being managed only by the radio base station and the first mobile station, the second radio base station key being managed only by the radio base station and the second mobile station; and
a transmission unit that is configured to transmit the inter-mobile station communication key to the first mobile station and the second mobile station.

5. A mobile communication method in which a first mobile station and a second mobile station transmit and receive a data signal through an inter-mobile station interface without a radio base station interface, the inter-mobile station interface being set between the first mobile station and the second mobile station, the radio base station interface being set between a radio base station and the first mobile station and the second mobile station, the mobile communication method comprising:
a step in which a mobile management node generates a first parameter and a second parameter to generate an inter-mobile station communication key using a first access security management key and a second access security management key, the inter-mobile station communication key being used in security of the data signal transmitted and received through the inter-mobile station interface, the first access security management key being managed only by the mobile management node and the first mobile station, the second access security management key being managed only by the mobile management node and the second mobile station;
a step in which the mobile management node transmits the first parameter to the first mobile station and transmits the second parameter to the second mobile station;
a step in which the first mobile station generates the inter-mobile station communication key using the first parameter;
a step in which the second mobile station generates the inter-mobile station communication key using the second parameter; and
a step in which the first mobile station and the second mobile station transmit and receive the data signal through the inter-mobile station interface using the inter-mobile station communication key.

6. A mobile management node used in a mobile communication system, the mobile communication system being configured such that a first mobile station and a second mobile station can transmit and receive a data signal through an inter-mobile station interface without a radio base station interface, the inter-mobile station interface being set between the first mobile station and the second mobile station, the radio base station interface being set between a radio base station and the first mobile station and the second mobile station, the mobile management node comprising:
a generator that is configured to generate a first parameter and a second parameter to generate an inter-mobile station communication key using a first access security management key and a second access security management key, the inter-mobile station communication key being used in security of the data signal transmitted and received through the inter-mobile station interface, the first access security management key being managed only by the mobile management node and the first mobile station, the second access security management key being managed only by the mobile management node and the second mobile station; and
a transmission unit that is configured to transmit the first parameter to the first mobile station and to transmit the second parameter to the second mobile station.

7. A mobile communication method in which a first mobile station and a second mobile station transmit and receive a data signal through an inter-mobile station interface without a radio base station interface, the inter-mobile station interface being set between the first mobile station and the second mobile station, the radio base station interface being set between a radio base station and the first mobile station and the second mobile station, the mobile communication method comprising:
a step in which the radio base station generates a first parameter and a second parameter to generate an inter-mobile station communication key using a first radio base station key and a second radio base station key, the inter-mobile station communication key being used in security of the data signal transmitted and received through the inter-mobile station interface, the first radio base station key being managed only by the radio base station and the first mobile station, the second radio base station key being managed only by the radio base station and the second mobile station;
a step in which the radio base station transmits the first parameter to the first mobile station and transmits the second parameter to the second mobile station;
a step in which the first mobile station generates the inter-mobile station communication key using the first parameter;
a step in which the second mobile station generates the inter-mobile station communication key using the second parameter; and
a step in which the first mobile station and the second mobile station transmit and receive the data signal through the inter-mobile station interface using the inter-mobile station communication key.

8. A radio base station used in a mobile communication system, the mobile communication system being configured such that a first mobile station and a second mobile station can transmit and receive a data signal through an inter-mobile station interface without a radio base station interface, the inter-mobile station interface being set between the first mobile station and the second mobile station, the radio base station interface being set between the radio base station and the first mobile station and the second mobile station, the radio base station comprising:
a generator that is configured to generate a first parameter and a second parameter to generate an inter-mobile station communication key using a first radio base station key and a second radio base station key, the inter-mobile station communication key being used in security of the data signal transmitted and received through the inter-mobile station interface, the first radio base station key being managed only by the radio base station and the first mobile station, the second radio base station key being managed only by the radio base station and the second mobile station; and
a transmission unit that is configured to transmit the first parameter to the first mobile station and to transmit the second parameter to the second mobile station.

9. A mobile station that acts as a first mobile station in a mobile communication system, the mobile communication system being configured such that a first mobile station and a second mobile station can transmit and receive a data signal through an inter-mobile station interface without a radio base station interface, the inter-mobile station interface being set between the first mobile station and the second mobile station, the radio base station interface being set between the radio base station and the first mobile station and the second mobile station, the mobile station comprising:
a reception unit that is configured to acquire an inter-mobile station communication key from the radio base station or a mobile management node; and
a communication unit that is configured to transmit and receive the data signal to and from the second mobile station through the inter-mobile station interface using the inter-mobile station communication key.

10. A mobile station that acts as a first mobile station in a mobile communication system, the mobile communication system being configured such that a first mobile station and a second mobile station can transmit and receive a data signal through an inter-mobile station interface without a radio base station interface, the inter-mobile station interface being set between the first mobile station and the second mobile station, the radio base station interface being set between the radio base station and the first mobile station and the second mobile station, the mobile station comprising:
a reception unit that is configured to acquire a first parameter from the radio base station or a mobile management node;
a generator that is configured to generate an inter-mobile station communication key using the first parameter; and
a communication unit that is configured to transmit and receive the data signal to and from the second mobile station through the inter-mobile station interface using the inter-mobile station communication key.
